# EUROPEAN PATENT APPLICATION

(11) **EP 3 944 114 A1**
(43) Date of publication of application: **26.01.2022**
(21) Application number: 21186898.9
(22) Date of filing: 21.07.2021
(51) Int. Cl.: G06F 21/62

(54) **GAN-BASED DATA OBFUSCATION DECIDER**

(30) Priority: 24.07.2020 US 202016937642
(71) Applicant: Siemens Aktiengesellschaft, 80333 München (DE)
(72) Inventor: RAHMAT, Safia, Plainsboro, NJ 08536 (US); OTTO, Martin, West Windsor, NJ 08550 (US)
(74) Representative: Horn Kleimann Waitzhofer Patentanwälte PartG mbB

(57) **Abstract**

It is recognized herein that a given party might be hesitant to share its data because of privacy concerns, among others. It is further recognized herein that current approaches to sharing data between multiple parties, such as secure multi-party computation, anonymization, or blockchain techniques, do not enable a given party to decide a level of obfuscation associated with its data without the intervention of a third party. In accordance with various embodiments described herein, a given party can determine an obfuscation level associated with its data, thereby instilling confidence in parties that their data is protected and kept private when data is shared and aggregated.

## Description

### BACKGROUND

Networks can monitor and analyze their data to detect anomalies, among other reasons. For example, a given network might perform its own mechanisms to detect anomalies within its network. Data from multiple parties or networks can also be shared for analysis, such as for alert correlation, anomaly detection, network performance monitoring, or the like. In some cases, aggregating data from multiple parties or networks can enhance the analysis that can be performed on the data, as compared to analyzing data from a single party or network. It is recognized herein, however, that a given party might be hesitant to share its data because of privacy concerns, among others.

### BRIEF SUMMARY

Embodiments of the invention address and overcome one or more of the described-herein shortcomings by providing methods, systems, and apparatuses that protect the privacy of information associated with data and the data itself, so that it can be aggregated with other data for analysis. Further, in accordance with various embodiments, a party or network that aggregates its data with another party or network can control an obfuscation level associated with its data, so as to control the privacy of its data and information related to its data.

In an example aspect, raw data is collected from one or more devices of an industrial system. A neural network can learn a data distribution of the raw data. Further, a system, such as an obfuscation level decider (OLD) system, can obtain a parameter value that relates to an obfuscation associated with the raw data. Based on the parameter value, the OLD system, in particular the neural network of the OLD system, can generate synthetic data that represents the raw data without disclosing the raw data. In various examples, the synthetic data can be generated so as to protect the raw data in accordance with the obfuscation associated with the raw data. The OLD system can send the synthetic data to an analysis system, such that that the synthetic data that represents the raw data of the industrial system can be aggregated with data of other industrial systems. In an example, the neural network can model the raw data so as to determine a first data distribution of the raw data. Further, the neural network can generate the synthetic data such that the synthetic data defines a second data distribution, wherein a difference is defined between the first data distribution and the second data distribution. In the example, the difference is within an accuracy tolerance of the first data distribution compared to the second data distribution. Further, the obfuscation associated with the raw data can vary as the parameter value varies, and the difference between the first data distribution and the second data distribution can vary as the parameter value varies.

In another example aspect, an OLD system can be coupled to one or more devices of an industrial system. The OLD system can include an input port configured to collect raw data from the one or more devices of the industrial system. The OLD system can further include a generative adversarial network (GAN) configured to obtain a parameter value that relates to an obfuscation associated with the raw data. The GAN can further be configured to, based on the parameter value, generate synthetic data that represents the raw data without disclosing the raw data. The GAN can generate the synthetic data so as to protect the raw data in accordance with the obfuscation associated with the raw data.

In embodiments of an OLD system coupled to one or more devices of an industrial system, the OLD system comprises:
an input port configured to collect raw data from the one or more devices of the industrial system; and
a generative adversarial network (GAN) configured to:
   obtain a parameter value that relates to an obfuscation associated with the raw data; and
   based on the parameter value, generate synthetic data that represents the raw data without disclosing the raw data, wherein the synthetic data is further generated so as to protect the raw data in accordance with the obfuscation associated with the raw data.

Embodiments of the OLD system may further comprise an output port configured to send the synthetic data to an analysis system, such that that the synthetic data that represents the raw data of the industrial system can be aggregated with data of other industrial systems.

The GAN may be further configured to:
model the raw data so as to determine a first data distribution of the raw data; and
generate the synthetic data such that the synthetic data defines a second data distribution, wherein a difference is defined between the first data distribution and the second data distribution, the difference within an accuracy tolerance of the first data distribution compared to the second data distribution.

In embodiments, one or more of the following aspects are implemented:
the obfuscation associated with the raw data varies as the parameter value varies, and the difference between the first data distribution and second data distribution varies as the parameter value varies;
the obfuscation associated with the raw data increases as the parameter value is increased;
the difference between the first data distribution and the second data distribution decreases as the parameter value is decreased;
the parameter value is about one such that, based on the parameter value of about one, the second data distribution of the synthetic data is within the accuracy tolerance of the first data distribution of the raw data, and the synthetic data protects the raw data in accordance with the obfuscation associated with the raw data;
the GAN is further configured to receive the parameter value from a data owner of the industrial system, so as to obtain the parameter value; and/or
the GAN is further configured to retrieve, based on the raw data, the parameter value from a database, so as to obtain the parameter value.

In yet another example aspect, a system includes a plurality of industrial networks configured to generate raw data. Each industrial network can be configured to include a generative adversarial network (GAN) configured to obtain a parameter value that relates to an obfuscation associated with the raw data. Each GAN can be further configured to, based on the parameter value, generate synthetic data that represents the raw data without disclosing the raw data. The system can further include a collector device coupled to each of the plurality of industrial networks. The collector device can be configured to obtain and aggregate the synthetic data from the plurality of industrial networks. In some examples, the system can further include an analysis system coupled to the collector device. The analysis system can be configured to evaluate the synthetic data from the plurality of industrial networks, so as to analyze the raw data from the plurality of industrial systems without receiving the raw data.

### BRIEF DESCRIPTION OF THE SEVERAL VIEWS OF THE DRAWINGS

The foregoing and other aspects of the present invention are best understood from the following detailed description when read in connection with the accompanying drawings. For the purpose of illustrating the invention, there is shown in the drawings embodiments that are presently preferred, it being understood, however, that the invention is not limited to the specific instrumentalities disclosed. Included in the drawings are the following Figures:
FIG. 1 is a block diagram of an example system that includes a plurality of plants or industrial environments or systems that each include an obfuscation level decider (OLD) system, in accordance with an example embodiment.
FIG. 2 is a block diagram of the OLD system in accordance with an example embodiment.
FIG. 3 is a flow diagram of a method that can be performed by the OLD system in accordance with an example embodiment.
FIG. 4 illustrates a computing environment within which embodiments of the disclosure may be implemented.

### DETAILED DESCRIPTION

It is recognized herein that a given party might be hesitant to share its data because of privacy concerns, among others. It is further recognized herein that current approaches to sharing data between multiple parties, such as secure multi-party computation, anonymization, or blockchain techniques, do not enable a given party to decide a level of obfuscation associated with its data without the intervention of a third party. In accordance with various embodiments described herein, a given party can determine an obfuscation level associated with its data, thereby instilling confidence in parties that their data is protected and kept private when data is shared and aggregated.

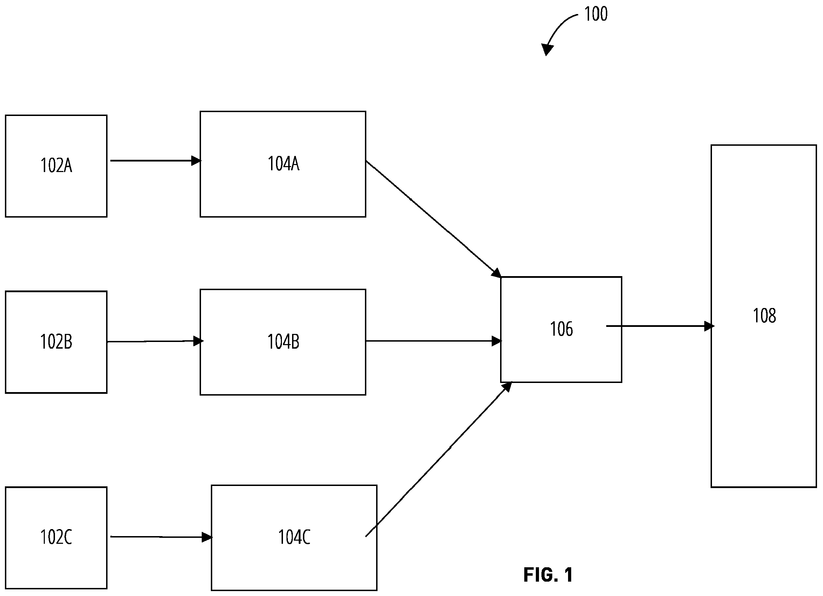

Referring to FIG. 1, an example industrial system 100 includes a plurality of plants or industrial environments or systems that can each define an operational technology (OT) network. In particular, the example industrial system 100 includes a first plant 102a, a second plant 102b, and a third plant 102c, though it will be understood that the industrial system 100 can include any number of plants or OT networks as desired. The plants 102a-c can define private or critical production networks, such as a network for industrial automation, a financial network, a network for railway automation and control, a life-critical system, or the like. Each of the plants 102a-c can define an obfuscation level decider (OLD) system or apparatus 104. In particular, the first plant 102a can include a first OLD system 104a, the second plant 102b can include a second OLD system 104b, and the third plant 102c can include a third OLD system 104c. Each OLD system 104 can be configured to provide data to one or more data evaluation systems, for instance to an analysis system 108. In some cases, the OLD system 104 can send data to a collector 106 that can aggregate data and provide aggregated data to the analysis system 108. The analysis system 108 can define, for example and without limitation, an Intrusion Detection System (IDS), a Security Information and Event Management (SIEM) system, or a Forensic Analysis system. The analysis system 108 may be part of the public internet or part of an IT network that is less secure than the OT networks of the plants 102a-c.

By way of example, if data that is sent to the collector 106 is not protected, a hacker might sniff and/or manipulate (e.g., change, delete, create) the collected data on the collector 106, or in transit from the plants 102a-c. By way of another example, a hacker might use sniffed data to their competitive advantage, for example by identifying confidential logic or attributes associated with the data, in addition to the data itself. In an example embodiment, to protect against such sniffing, among other potential vulnerabilities, the OLD system 104 generates synthetic data that can be analyzed by systems within a network external to an OT network defined by a particular plant, for instance the analysis system 108. The synthetic data can be generated so as to preserve the privacy of the original dataset, while maintaining the utility of the original dataset. It is recognized herein that other approaches to protecting privacy, such as encoding, anonymizing, or the like, can be ill-suited for an industrial environment that includes heterogeneous OT networks with different and/or legacy applications across the network.

It is recognized herein that generating synthetic data and providing the synthetic data, rather than the raw or real data, to the analysis system 108 can protect various information related to the raw data, in addition to the raw data itself. In some cases, the synthetic data can be generated so as to mask values associated with the corresponding raw data. By way of further example, and without limitation, the identity of various asset owners related to each of the plants 102a-c, logic or trade secrets related to the plants 102a-c, and components or systems of the various plants 102a-c, can be protected by generating synthetic data to represent raw data. It is further recognized herein that such privacy protections that are derived from the synthetic data can, in some cases, motivate or allow the various plants 102a-c to combine their data together at the collector 106 for analysis, thereby improving the data sample that can be analyzed, and enhancing the data analysis that can be performed.

In an example, each plant 102a-c can include a respective OLD system 104a-c on the premises of the respective plant or connected to the OT network defined by the respective plant. Data from the plants 102a-c can be fed into the respective OLD system 104a-c. Each OLD system 104 can determine a corresponding level of anonymity or obfuscation for its data. As used herein, unless otherwise specified, anonymity and obfuscation can be used interchangeably, without limitation. Based on the level of anonymity, the OLD system 104 can generate synthetic data that represents real data. For example, a given plant or data owner associated with a given plant can configure its corresponding OLD system 104 with a value, such that the level of anonymity is based on the value. Thus, a given plant or data owner associated with a given plant can configure the level of anonymity of synthetic data that is generated by the respective OLD system 104. The synthetic data from the plants 102a-c, which can be generated according to various levels of anonymity, can be aggregated at the collector 106 and sent to the analysis system 108 for analysis.

The synthetic data can be sent to analysis system via protected channels, using encryption for example, so as to further ensure protection against hacking. Thus, in various examples, the synthetic data can ensure that specific secrets of the data owner are maintained, and the synthetic data can also be protected. In some cases, the nature of the synthetic data can ensure that specific sensitive data is protected, while maintaining enough information that is required for the corresponding analysis to be effective.

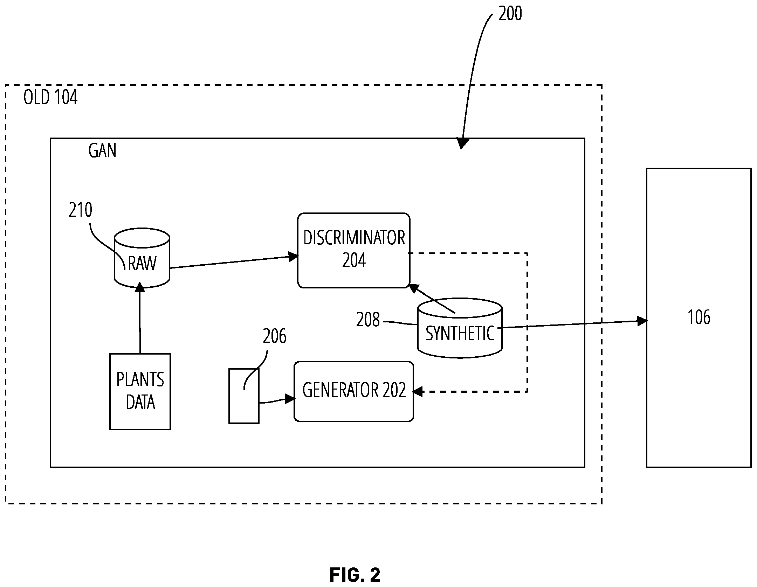

Referring also to FIG. 2, the OLD system 104 can include a neural network, for instance a neural network module 200 that can learn attributes related to raw data collected from a corresponding plant 102a-c or network. Thus, the neural network module 200 can be trained so as to generate synthetic data based on the raw data, and based on a level of anonymity or obfuscation associated with the raw data. Based on learning data distributions associated with raw data, the neural network module 200 can generate a data sample that has a similar distribution to corresponding raw data. Such a data sample can define sanitized data that corresponds to raw data. The similarity of the synthetic data to the corresponding raw data can vary depending on a threshold or tolerance that can be configured by the data owner (e.g., plants 102a-c). By way of example, after the GAN module 200 of each of the OLD systems 104a-c generates the respective sanitized data, the sanitized data can be sent to the collector 106. Thus, in such a configuration, the data that leaves the respective OLD system 104a-c is different than the actual data that is collected from the respective plants 102a-c.

Still referring to FIG. 2, the neural network module 200, and thus the OLD system 104, can include a generator 202 and a discriminator 204 so as to define a generative adversarial network (GAN). The OLD system 104 can further include one or more databases, for instance a first or raw data database 210 and a second or synthetic data database 208. The OLD system 104 can be configured to train the neural network module 200 based on real or raw data from one or more devices of the respective plant 102a-c. When the GAN is trained, the neural network module 200 can generate synthetic data, based on corresponding raw data, that defines a data distribution that is similar to the data distribution of the corresponding raw data. For example, the synthetic data can define a data distribution that falls within a predetermined tolerance or threshold of the data distribution defined by the corresponding raw data.

In some cases, the predetermined tolerance can be based on a parameter value, which can be referred to herein as ε. Each data owner or plant 102a-c can configure the parameter value ε on which the generation of their respective synthetic data is based. In particular, each data owner or plant 102a-c can configure the parameter value ε so as to control the privacy or obfuscation level associated with the respective synthetic data. It is recognized herein that the parameter value ε is generally used in differential privacy to measure the distance between raw data and synthetic data (e.g., as in the distribution). In accordance with various embodiments described herein, however, the parameter value ε can be used at the beginning of training a given GAN. For example, a target value of ε can be first selected, and then a GAN can be trained so as to generate the target ε value. Thus, in various examples, a data owner can specify up front an obfuscation level (e.g., parameter value ε or distance to real data) that the data owner accepts or desires. As further described herein, the acceptable value of the parameter value ε may depend on the data and the nature of the privacy concerns of the data owner. In various examples, the GAN 200 can generate data for various values of ε, so as meet various levels of desired anonymity.

In various examples, noise vectors 206 can be input into the generator 202, and the noise vectors 206 can define any random noise. In an example, the noise vectors 206 can define random number generators. Based on the noise vectors 206, the generator 202 can generate synthetic data, which can be stored in the synthetic data database 208 of the OLD system 104. In various examples, the synthetic data can define a meaningful output that represents the working of a particular plant, while preserving the privacy of the plant.

In various examples, the parameter value ε can define a metric of privacy loss at a differential change in data (e.g., adding or removing a data entry). The parameter value ε can be tunable by database parameters. For example, as the parameter value ε is decreased, the noisiness of the data that the discriminator 204 is being trained on increases. Thus, continuing with the example, as the parameter value ε is decreased so as to define a smaller value, the privacy or obfuscation level associated with the data generated by the neural network module 200 increases (better privacy protection). Conversely, as the parameter value ε is increased so as to define a larger value, the privacy or obfuscation level associated with the data generated by the neural network module 200 decreases (e.g., more randomized differential query). As the privacy or obfuscation level associated with synthetic data decreases, the accuracy of the synthetic data as compared to the corresponding raw data may decrease. For example, a difference between the data distribution defined by the raw data and a distribution defined by the synthetic data may increase as the parameter value ε is increased, and visa-versa. Consequently, in some cases, as the privacy or obfuscation level associated with the synthetic data decreases, the accuracy of the synthetic data may decrease so as to decrease the utility of the synthetic data. Therefore, the parameter value ε may be varied as the privacy concerns or accuracy requirements of the synthetic data vary.

With respect to the noise vectors 206, the GAN 200 can generate synthetic data by learning the distribution of original data. It is recognized herein, however, that due to excellent learning capabilities of GANs, there may be a problem with respect to sensitive data. In particular, for example, the GAN model may learn some distributions that could reveal private information. To counter that, in an example, the GAN 200 can define a differentially private GAN. In particular, noise 206 can be added to the gradient, which refers to the value used to tweak the weights on the neural network, during the learning process. This noisiness can be controlled by the metric called ε. The value ε can refer to the metric of privacy loss at a differentially change in data (e.g., adding or removing an entry). Thus, the parameter value ε can determine the noisiness of the data. It is recognized herein that here is no point in generating and reporting nonsensical, noisy answers. Thus, the privacy can be controlled by tweaking the value of ε, such that the data is useful without exposing any sensitive data.

In some cases, the sensitivity of the addition of the noise 206 to the output depends on the output function. For example, in a use case in which the goal is to count the number of benign samples, the sensitivity may be one, as addition or deletion of one row can affect the output by one. In another example, a Wasserstein loss function can be applied so as to calculate the distance of a statistical feature of synthetic sample that is generated to that of the corresponding original or training data. Thus, in various examples, when the sensitivity of the function is higher, the data may be noisier, and thus more private and potentially less useful. In some examples, the noise 206 is added in accordance with the Laplace mechanism to disguise the data, although embodiments are not limited as such. Further, it is recognized herein that using data with differential privacy only (versus epsilon ε-differential privacy) may be susceptible to inference attack. For example, in a differential privacy only implementation, multiple queries made by an adversary or an inference attack on differentially private data can reveal the sensitive information. Therefore, various embodiments described herein first preserve the private information or data, and then synthetic data can be generated based on that data using GANs, for instance the GAN 200.

Thus, with reference to FIG. 2, during training of the neural network module 200, fake data and the real data can be input to the discriminator 204, from the synthetic data database 208 and the raw data database 210, respectively. The discriminator 204 can learn real data from fake data, and the outputs of the discriminator 204 can be fed back to the generator 202 so that the neural network module 200 can be fine-tuned. Thereafter, the generator 202 can generate synthetic data that more closely resembles the corresponding raw data, or defines statistical properties that more closely resemble select statistical properties of the raw data. Thus, a training stage of the neural network module 200 can include gathering the original source data for subscribed variables or statistical properties of interest. Such variables or properties of interest can be configured on the OLD system 104 via a configuration file or a user interface, for example. Further, the privacy or obfuscation level can be configured on the OLD system 104 via a configuration file or a user interface. In an example, the parameter value ε can be adjusted based on the privacy or obfuscation level. Alternatively, or additionally, the parameter value ε can be configured directly on the OLD system 104 via a configuration file or a user interface. The source data can be input to the generator 202 and the discriminator 204. The discriminator 204 can use the source data as a training dataset (e.g., sampling from it) and can control the training process until predetermined accuracy or obfuscation levels are reached, or until the synthetic data is within a predetermined tolerance related to accuracy and/or obfuscation. The generator 202 can use those samples to generate seed data, in some cases, as opposed to randomized data from a normal distribution. The generator 202 can derive the distribution of the data, then use the distribution to spread random data to, so as to increase the error rate of the discriminator 204 (e.g., fooling the discriminator into thinking incorrect candidates are selected).

Thus, as described herein in accordance with various embodiments, participating parties (e.g., plants 102a-c) can decide the level to which their data should be obfuscated before being shared with other parties. In some cases, the participating parties can set a threshold that defines an anonymization that is acceptable to the respective party. Based on the anonymization, the neural network module 200, in particular the GAN, can model the underlying data distribution. Based on the model and the threshold, the synthetic data can be generated so as to resemble the corresponding raw data. In some cases, the GAN of the neural network model also uses differential privacy, as described herein. For example, the data that is fed to the discriminator 204 can be differentially private during the training stage, and thus the data learned by the generator can be differentially private. Thus, in accordance with various embodiments, privacy of the synthetic data can be guaranteed. In various examples, the parameter value ε is configured based on the privacy needs of the respective participating party. In some examples, it is recognized herein that a parameter value ε of about one (1) protects the privacy of the data while maintaining the usability of the data. It will be understood that the parameter value ε can vary as desired, for instance based on specific privacy or data usability needs. Thus, the parameter value ε can be tunable by the dataset parameters and can be chosen by the data owner or party based on the level of usability required for the shared data. In particular, the raw data collected by the OLD system 104 can define a first data distribution, and the neural network module 200 can generate synthetic data based on the first distribution of the raw data, such that the synthetic data defines a second data distribution that falls within a predetermined tolerance of the first data distribution. By way of example, the data distributions of the synthetic and real data can each define a mean, and the means can be compared to a predetermined tolerance to determine whether they are sufficiently close to, or sufficiently far from, each other such that the synthetic data represents the raw data in accordance with the requirements of the data owner. The predetermined tolerance can vary as desired, and can be defined by the parameter value ε.

For example, the parameter value ε, and thus the predetermined tolerance, might vary depending on the type of data that is being generated and compared. By way of another example, the parameter value ε, and thus the predetermined tolerance, may also indicate a maximum accuracy with which the synthetic data can represent the raw data. For example, in some cases, if the synthetic data is too close (e.g., greater than an upper limit of the predetermined tolerance) to the raw data, privacy related to the raw data might be comprised. Thereafter, the synthetic data that represents the raw data can be analyzed, such that an analysis of the raw data is performed without the raw data having to be sent to the collector 106, and thus without the raw data having to be sent to any analysis systems.

In some cases, one or more statistical properties of the raw data are identified and compared to one or more statistical properties of the corresponding synthetic data. Statistical properties may include, for example and without limitation, average, mean mode, standard deviation, overall data distribution (e.g., defined by linear or nonlinear regression), kurtosis, and skewness. Data can be anonymized or synthesized by the OLD system 104 so as to preserve one or more statistical properties of interest. Thus, the OLD system 104 can be configured to preserve one or more select statistical properties, which can be dependent on the type of raw data that is collected. Further, in some cases, the statistical properties that are of interest can be changed while data is collected.

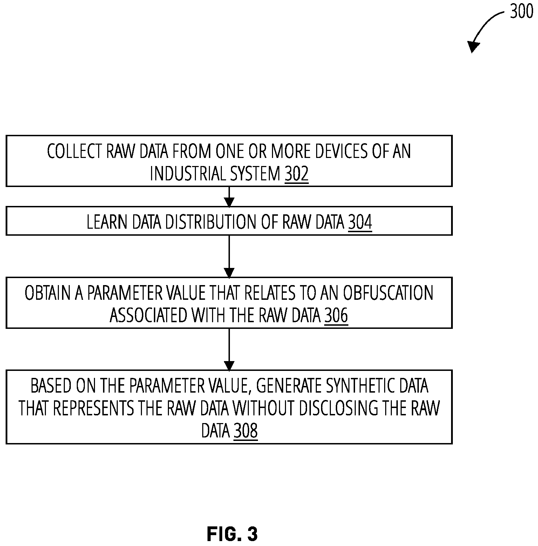

Referring now to FIG. 3, example operations 300 are shown that can be performed by the OLD system 104. At 302, raw data is collected from one or more devices of an industrial system. A neural network can learn a data distribution of the raw data, at 304. Further, at 306 the OLD system 104 can obtain a parameter value that relates to an obfuscation associated with the raw data. Based on the parameter value, the OLD system 104, in particular the neural network of the OLD system 104, can generate synthetic data that represents the raw data without disclosing the raw data, at 308. In various examples, the synthetic data can be generated so as to protect the raw data in accordance with the obfuscation associated with the raw data. The OLD system 104 can send the synthetic data to an analysis system, such that that the synthetic data that represents the raw data of the industrial system can be aggregated with data of other industrial systems. In an example, the neural network can model the raw data so as to determine a first data distribution of the raw data. Further, the neural network can generate the synthetic data such that the synthetic data defines a second data distribution, wherein a difference is defined between the first data distribution and the second data distribution. In the example, the difference is within an accuracy tolerance of the first data distribution compared to the second data distribution. Further, the obfuscation associated with the raw data can vary as the parameter value varies, and the difference between the first data distribution and the second data distribution can vary as the parameter value varies.

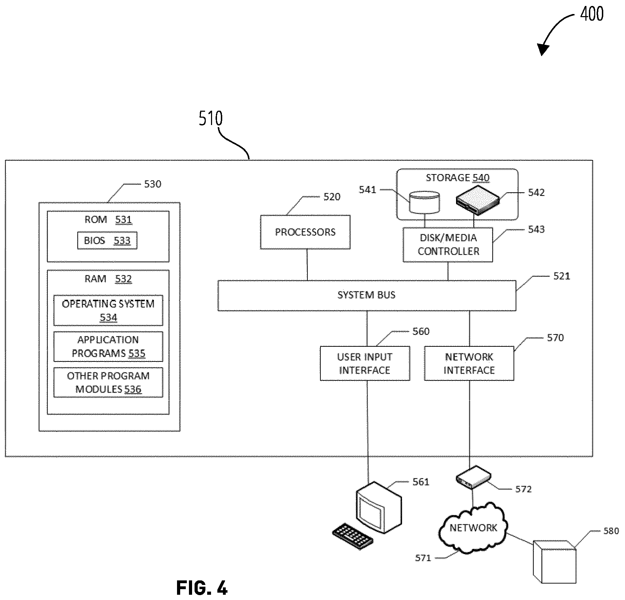

FIG. 4 illustrates an example of a computing environment within which embodiments of the present disclosure may be implemented. A computing environment 400 includes a computer system 510 that may include a communication mechanism such as a system bus 521 or other communication mechanism for communicating information within the computer system 510. The computer system 510 further includes one or more processors 520 coupled with the system bus 521 for processing the information. The robot device 104 may include, or be coupled to, the one or more processors 520.

The processors 520 may include one or more central processing units (CPUs), graphical processing units (GPUs), or any other processor known in the art. More generally, a processor as described herein is a device for executing machine-readable instructions stored on a computer readable medium, for performing tasks and may comprise any one or combination of, hardware and firmware. A processor may also comprise memory storing machine-readable instructions executable for performing tasks. A processor acts upon information by manipulating, analyzing, modifying, converting or transmitting information for use by an executable procedure or an information device, and/or by routing the information to an output device. A processor may use or comprise the capabilities of a computer, controller or microprocessor, for example, and be conditioned using executable instructions to perform special purpose functions not performed by a general purpose computer. A processor may include any type of suitable processing unit including, but not limited to, a central processing unit, a microprocessor, a Reduced Instruction Set Computer (RISC) microprocessor, a Complex Instruction Set Computer (CISC) microprocessor, a microcontroller, an Application Specific Integrated Circuit (ASIC), a Field-Programmable Gate Array (FPGA), a System-on-a-Chip (SoC), a digital signal processor (DSP), and so forth. Further, the processor(s) 520 may have any suitable microarchitecture design that includes any number of constituent components such as, for example, registers, multiplexers, arithmetic logic units, cache controllers for controlling read/write operations to cache memory, branch predictors, or the like. The microarchitecture design of the processor may be capable of supporting any of a variety of instruction sets. A processor may be coupled (electrically and/or as comprising executable components) with any other processor enabling interaction and/or communication there-between. A user interface processor or generator is a known element comprising electronic circuitry or software or a combination of both for generating display images or portions thereof. A user interface comprises one or more display images enabling user interaction with a processor or other device.

The system bus 521 may include at least one of a system bus, a memory bus, an address bus, or a message bus, and may permit exchange of information (e.g., data (including computer-executable code), signaling, etc.) between various components of the computer system 510. The system bus 521 may include, without limitation, a memory bus or a memory controller, a peripheral bus, an accelerated graphics port, and so forth. The system bus 521 may be associated with any suitable bus architecture including, without limitation, an Industry Standard Architecture (ISA), a Micro Channel Architecture (MCA), an Enhanced ISA (EISA), a Video Electronics Standards Association (VESA) architecture, an Accelerated Graphics Port (AGP) architecture, a Peripheral Component Interconnects (PCI) architecture, a PCI-Express architecture, a Personal Computer Memory Card International Association (PCMCIA) architecture, a Universal Serial Bus (USB) architecture, and so forth.

Continuing with reference to FIG. 4, the computer system 510 may also include a system memory 530 coupled to the system bus 521 for storing information and instructions to be executed by processors 520. The system memory 530 may include computer readable storage media in the form of volatile and/or nonvolatile memory, such as read only memory (ROM) 531 and/or random access memory (RAM) 532. The RAM 532 may include other dynamic storage device(s) (e.g., dynamic RAM, static RAM, and synchronous DRAM). The ROM 531 may include other static storage device(s) (e.g., programmable ROM, erasable PROM, and electrically erasable PROM). In addition, the system memory 530 may be used for storing temporary variables or other intermediate information during the execution of instructions by the processors 520. A basic input/output system 533 (BIOS) containing the basic routines that help to transfer information between elements within computer system 510, such as during start-up, may be stored in the ROM 531. RAM 532 may contain data and/or program modules that are immediately accessible to and/or presently being operated on by the processors 520. System memory 530 may additionally include, for example, operating system 534, application programs 535, and other program modules 536. Application programs 535 may also include a user portal for development of the application program, allowing input parameters to be entered and modified as necessary.

The operating system 534 may be loaded into the memory 530 and may provide an interface between other application software executing on the computer system 510 and hardware resources of the computer system 510. More specifically, the operating system 534 may include a set of computer-executable instructions for managing hardware resources of the computer system 510 and for providing common services to other application programs (e.g., managing memory allocation among various application programs). In certain example embodiments, the operating system 534 may control execution of one or more of the program modules depicted as being stored in the data storage 540. The operating system 534 may include any operating system now known or which may be developed in the future including, but not limited to, any server operating system, any mainframe operating system, or any other proprietary or non-proprietary operating system.

The computer system 510 may also include a disk/media controller 543 coupled to the system bus 521 to control one or more storage devices for storing information and instructions, such as a magnetic hard disk 541 and/or a removable media drive 542 (e.g., floppy disk drive, compact disc drive, tape drive, flash drive, and/or solid state drive). Storage devices 540 may be added to the computer system 510 using an appropriate device interface (e.g., a small computer system interface (SCSI), integrated device electronics (IDE), Universal Serial Bus (USB), or FireWire). Storage devices 541, 542 may be external to the computer system 510.

The computer system 510 may also include a field device interface 565 coupled to the system bus 521 to control a field device 566, such as a device used in a production line. The computer system 510 may include a user input interface or GUI 561, which may comprise one or more input devices, such as a keyboard, touchscreen, tablet and/or a pointing device, for interacting with a computer user and providing information to the processors 520.

The computer system 510 may perform a portion or all of the processing steps of embodiments of the invention in response to the processors 520 executing one or more sequences of one or more instructions contained in a memory, such as the system memory 530. Such instructions may be read into the system memory 530 from another computer readable medium of storage 540, such as the magnetic hard disk 541 or the removable media drive 542. The magnetic hard disk 541 and/or removable media drive 542 may contain one or more data stores and data files used by embodiments of the present disclosure. The data store 540 may include, but are not limited to, databases (e.g., relational, object-oriented, etc.), file systems, flat files, distributed data stores in which data is stored on more than one node of a computer network, peer-to-peer network data stores, or the like. The data stores may store various types of data such as, for example, skill data, sensor data, or any other data generated in accordance with the embodiments of the disclosure. Data store contents and data files may be encrypted to improve security. The processors 520 may also be employed in a multi-processing arrangement to execute the one or more sequences of instructions contained in system memory 530. In alternative embodiments, hard-wired circuitry may be used in place of or in combination with software instructions. Thus, embodiments are not limited to any specific combination of hardware circuitry and software.

As stated above, the computer system 510 may include at least one computer readable medium or memory for holding instructions programmed according to embodiments of the invention and for containing data structures, tables, records, or other data described herein. The term "computer readable medium" as used herein refers to any medium that participates in providing instructions to the processors 520 for execution. A computer readable medium may take many forms including, but not limited to, non-transitory, non-volatile media, volatile media, and transmission media. Non-limiting examples of non-volatile media include optical disks, solid state drives, magnetic disks, and magneto-optical disks, such as magnetic hard disk 541 or removable media drive 542. Non-limiting examples of volatile media include dynamic memory, such as system memory 530. Non-limiting examples of transmission media include coaxial cables, copper wire, and fiber optics, including the wires that make up the system bus 521. Transmission media may also take the form of acoustic or light waves, such as those generated during radio wave and infrared data communications.

Computer readable medium instructions for carrying out operations of the present disclosure may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to embodiments of the disclosure. It will be understood that each block of the flowchart illustrations and/or block diagrams, and combinations of blocks in the flowchart illustrations and/or block diagrams, may be implemented by computer readable medium instructions.

The computing environment 400 may further include the computer system 510 operating in a networked environment using logical connections to one or more remote computers, such as remote computing device 580. The network interface 570 may enable communication, for example, with other remote devices 580 or systems and/or the storage devices 541, 542 via the network 571. Remote computing device 580 may be a personal computer (laptop or desktop), a mobile device, a server, a router, a network PC, a peer device or other common network node, and typically includes many or all of the elements described above relative to computer system 510. When used in a networking environment, computer system 510 may include modem 572 for establishing communications over a network 571, such as the Internet. Modem 572 may be connected to system bus 521 via user network interface 570, or via another appropriate mechanism.

Network 571 may be any network or system generally known in the art, including the Internet, an intranet, a local area network (LAN), a wide area network (WAN), a metropolitan area network (MAN), a direct connection or series of connections, a cellular telephone network, or any other network or medium capable of facilitating communication between computer system 510 and other computers (e.g., remote computing device 580). The network 571 may be wired, wireless or a combination thereof. Wired connections may be implemented using Ethernet, Universal Serial Bus (USB), RJ-6, or any other wired connection generally known in the art. Wireless connections may be implemented using Wi-Fi, WiMAX, and Bluetooth, infrared, cellular networks, satellite or any other wireless connection methodology generally known in the art. Additionally, several networks may work alone or in communication with each other to facilitate communication in the network 571.

It should be appreciated that the program modules, applications, computer-executable instructions, code, or the like depicted in FIG. 4 as being stored in the system memory 530 are merely illustrative and not exhaustive and that processing described as being supported by any particular module may alternatively be distributed across multiple modules or performed by a different module. In addition, various program module(s), script(s), plug-in(s), Application Programming Interface(s) (API(s)), or any other suitable computer-executable code hosted locally on the computer system 510, the remote device 580, and/or hosted on other computing device(s) accessible via one or more of the network(s) 571, may be provided to support functionality provided by the program modules, applications, or computer-executable code depicted in FIG. 4 and/or additional or alternate functionality. Further, functionality may be modularized differently such that processing described as being supported collectively by the collection of program modules depicted in FIG. 2 may be performed by a fewer or greater number of modules, or functionality described as being supported by any particular module may be supported, at least in part, by another module. In addition, program modules that support the functionality described herein may form part of one or more applications executable across any number of systems or devices in accordance with any suitable computing model such as, for example, a client-server model, a peer-to-peer model, and so forth. In addition, any of the functionality described as being supported by any of the program modules depicted in FIG. 4 may be implemented, at least partially, in hardware and/or firmware across any number of devices.

It should further be appreciated that the computer system 510 may include alternate and/or additional hardware, software, or firmware components beyond those described or depicted without departing from the scope of the disclosure. More particularly, it should be appreciated that software, firmware, or hardware components depicted as forming part of the computer system 510 are merely illustrative and that some components may not be present or additional components may be provided in various embodiments. While various illustrative program modules have been depicted and described as software modules stored in system memory 530, it should be appreciated that functionality described as being supported by the program modules may be enabled by any combination of hardware, software, and/or firmware. It should further be appreciated that each of the above-mentioned modules may, in various embodiments, represent a logical partitioning of supported functionality. This logical partitioning is depicted for ease of explanation of the functionality and may not be representative of the structure of software, hardware, and/or firmware for implementing the functionality. Accordingly, it should be appreciated that functionality described as being provided by a particular module may, in various embodiments, be provided at least in part by one or more other modules. Further, one or more depicted modules may not be present in certain embodiments, while in other embodiments, additional modules not depicted may be present and may support at least a portion of the described functionality and/or additional functionality. Moreover, while certain modules may be depicted and described as sub-modules of another module, in certain embodiments, such modules may be provided as independent modules or as sub-modules of other modules.

Although specific embodiments of the disclosure have been described, one of ordinary skill in the art will recognize that numerous other modifications and alternative embodiments are within the scope of the disclosure. For example, any of the functionality and/or processing capabilities described with respect to a particular device or component may be performed by any other device or component. Further, while various illustrative implementations and architectures have been described in accordance with embodiments of the disclosure, one of ordinary skill in the art will appreciate that numerous other modifications to the illustrative implementations and architectures described herein are also within the scope of this disclosure. In addition, it should be appreciated that any operation, element, component, data, or the like described herein as being based on another operation, element, component, data, or the like can be additionally based on one or more other operations, elements, components, data, or the like. Accordingly, the phrase "based on," or variants thereof, should be interpreted as "based at least in part on."

Although embodiments have been described in language specific to structural features and/or methodological acts, it is to be understood that the disclosure is not necessarily limited to the specific features or acts described. Rather, the specific features and acts are disclosed as illustrative forms of implementing the embodiments. Conditional language, such as, among others, "can," "could," "might," or "may," unless specifically stated otherwise, or otherwise understood within the context as used, is generally intended to convey that certain embodiments could include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

The flowchart and block diagrams in the Figures illustrate the architecture, functionality, and operation of possible implementations of systems, methods, and computer program products according to various embodiments of the present disclosure. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method comprising:
collecting raw data from one or more devices of an industrial system;
obtaining a parameter value that relates to an obfuscation associated with the raw data; and
based on the parameter value, generating synthetic data that represents the raw data without disclosing the raw data,
wherein the synthetic data is further generated so as to protect the raw data in accordance with the obfuscation associated with the raw data.

2. The method of claim 1, the method further comprising:
sending the synthetic data to an analysis system, such that that the synthetic data that represents the raw data of the industrial system can be aggregated with data of other industrial systems.

3. The method of claim 1 or 2, the method further comprising:
modeling, by a neural network, the raw data so as to determine a first data distribution of the raw data; and
generating, by the neural network, the synthetic data such that the synthetic data defines a second data distribution,
wherein a difference is defined between the first data distribution and the second data distribution, the difference within an accuracy tolerance of the first data distribution compared to the second data distribution.

4. The method of claim 3, wherein the obfuscation associated with the raw data varies as the parameter value varies, and the difference between the first data distribution and second data distribution varies as the parameter value varies.

5. The method of claim 4, wherein the obfuscation associated with the raw data increases as the parameter value is increased.

6. The method of claim 4 or 5, wherein the difference between the first data distribution and the second data distribution decreases as the parameter value is decreased.

7. The method of any one of claims 3 - 6, wherein the parameter value is about one such that, based on the parameter value of about one, the second data distribution of the synthetic data is within the accuracy tolerance of the first data distribution of the raw data, and the synthetic data protects the raw data in accordance with the obfuscation associated with the raw data.

8. The method of any one of claims 1 - 7, wherein obtaining the parameter value comprises receiving the parameter value from a data owner of the industrial system.

9. A system comprising:
a plurality of industrial networks configured to generate raw data, each industrial network comprising a generative adversarial network (GAN) configured to:
obtain a parameter value that relates to an obfuscation associated with the raw data; and
based on the parameter value, generate synthetic data that represents the raw data without disclosing the raw data, and
a collector device coupled to each of the plurality of industrial networks, the collector device configured to obtain and aggregate the synthetic data from the plurality of industrial networks.

10. The system of claim 9, wherein the collector device is configured to carry out the method of claim 1 or 2.

11. The system of claim 9 or 10, the system further comprising:
an analysis system coupled to the collector device, the analysis system configured to evaluate the synthetic data from the plurality of industrial networks, so as to analyze the raw data from the plurality of industrial systems without receiving the raw data.

12. The system of claim 11, wherein the analysis system is configured to carry out the method of any one of claims 3 to 8, wherein the system includes a neural network.

13. An obfuscation level decider (OLD) system configured to couple to one or more devices of an industrial system, the OLD system including means configured to carry out the method steps according to any one of claims 1 - 8.
